# EUROPEAN PATENT SPECIFICATION

(11) **EP 4 308 756 B1**
(45) Date of publication and mention of the grant of the patent: **11.06.2025**
(21) Application number: 22709815.9
(22) Date of filing: 07.03.2022
(51) Int. Cl.: D06F 39/10

(54) **WASHING DEVICE**
WASCHVORRICHTUNG
DISPOSITIF DE LAVAGE

(30) Priority: 19.03.2021 IT 202100001406 U
(43) Date of publication of application: 24.01.2024
(73) Proprietor: Sala, Sergio, 20835 Muggio' (MB) (IT)
(72) Inventor: Sala, Sergio, 20835 Muggio' (MB) (IT)
(74) Representative: Vatti, Francesco Paolo
(86) International application number: PCT/IB2022/051978
(87) International publication number: WO 2022/195396

(56) References cited:
- CN-A- 108 468 669
- KR-A- 20060 101 134
- KR-A- 20090 119 251
- KR-B1- 100 408 197
- US-B2- 7 690 625

## Description

### FIELD OF INVENTION

This invention refers to an aid for washing machines, consisting in a device containing some solid spheres, useful for washing, both in industrial and domestic environment.

### BACKGROUND OF THE INVENTION

Document KR 2006 0101134 A discloses a washing ball containing nano-silver particles which are emitted into wash water for sterilization and deodorization of the laundry.

Fabrics are usually subject to get dirty during their use because of a contact with dust, grease, food, sweat and other, after which they cannot be used without being unhealthy and/or not appropriate. The normal way to use them as at the beginning is to wash them somehow. This is something which has been in use since the antique times.

In the past, clothes and fabrics were washed in water, rubbing them and using some kind of detergents, normally including ashes, which helped to remove the most important spots from the clothes and fabrics. Surfactants have become more popular in the last decades. Subsequently, hand washing was gradually replaced by the use of washing machines, allowing people to have the clothes and fabrics made clean with no burden: dirty clothes have to be inserted in the machine basket, soap is to be added, a programme is selected and the machine is activated. At the end of the programme, wet, clean fabrics are withdrawn from the basket and dried either by exposing them to air or through a dryer machine, and they are possibly ironed to a fresher and more proper aspect.

Modern machines and soaps allow to have a high degree of cleanness and they very often disinfect the clothes and fabrics, removing the risk of diseases due to bacteria or viruses adhering on the clothes.

The washing process is normally carried out by adding to the loaded machine water, which dissolves the soap and impregnates the clothes and fabrics. The basket is a rotary basket, which stirs the clothes to be washed, allowing the soap to wash clothes and fabrics. The soap removes the dirty particles, removing them from the cloth or fabric; soap micelles absorb the dirty particles, normally being lipophyle particles of grease. The dirty water is normally drained and sent through sewage to the clarification plant, in order to remove the excess soap. Since part of the soap remains trapped within the fibres, rinsing with fresh water is usually required, normally after draining. Fresh water removes the remaining soap particles by dissolving them, partly stained by the dirty particles, so that the fabric or cloth is eventually completely clean and contain no longer detergent. However, water after rinsing is dirty because of the removed soap and the dirty particles trapped within them and cannot, for instance, be drunk nor even reutilised. Therefore, the use of the washing machines results in an increase of the drain water pollution which should be disposed of, with reclamation costs and loss of water. Under such conditions, the water used for washing clothes and fabrics cannot be reutilised, unless it undergoes a purification in the normal plants, usually through the use of suitable bacteria. Very often, a double wash is required, so that water is uploaded in a large amount three times. This results in a waste of water and energy and in an increase of wastewater.

Other issues are to be considered.

During the normal washing operation, the temperature should be at least as high as 40 °C, since otherwise fibres cannot be opened and cleaned. This results in a further consumption of energy, especially when sanitisation is sought for, which entails higher temperatures, up to 90 °C.

Moreover, brushing of the washed fabrics, with the extraction of fleece, should be performed. This hand operation is time-consuming and it makes the process comparatively expensive, requesting personnel for this operation. The use of a dried thistle brush or of a roller is required. It is also to be borne in mind that it works only with animal fibres, since the brush can extract only fibres with a discontinuous length of 35 mm, the attempt of applying this process to longer fibres resulting in surface pilling, which is rather ugly to be seen.

CN 108 468 669 discloses a high seal hydraulic valve, comprising a three-way valve body and two horizontally corresponding valve ports, which are provided with fixing valve sleeves and movable steels balls, matched with fixing valve sleeves, a spring being arranged between the two steel balls.

US 7 690 625 discloses a valve including a shutter placed in a chamber which is arranged in the valve body and whose end is provided with a seat against which a plug-forming part of the shutter is pressed in the closed position of the valve and is remote in the open position thereof. The inventive valve also includes a magnetic control device provided with the shutter magnetic drive device disposed outside the chamber and displacing the shutter in the closed or open position thereof. The magnetic control device includes at least one ball which is made of a magnetic material, disposed in the chamber and is coupled with an external magnetic drive device, wherein the ball is associated with the shutter in such a way that the shutter is driven in the chamber when the ball is moved by a magnetic drive device.

### SUMMARY OF THE INVENTION

Aim of the invention is at proposing a washing device, to be used in both home and industrial washing machines, which overcomes the above drawbacks and which allows to save soap, water and energy, which reduces water pollution and which automa-tises the brushing process. This purpose is achieved through a washing device, consisting in a box to be inserted in the washing basket of a washing machine, wherein the box has two holes, allowing the access and the exit of water within the box, wherein a number of metallic spheres are contained within the box, said spheres having a diameter larger than the said two holes, characterised in that said metallic spheres are permanent magnets and in that a sphere of pure silver is also contained in the box (1). Subclaims disclose preferential features of the invention.

### BRIEF DESCRIPTION OF THE DRAWINGS

Further features and advantages of this invention will better appear from the subsequent detailed description of a preferred embodiment thereof, which is merely exemplary and not limiting, the said embodiment being illustrated in the annexed drawings, wherein:

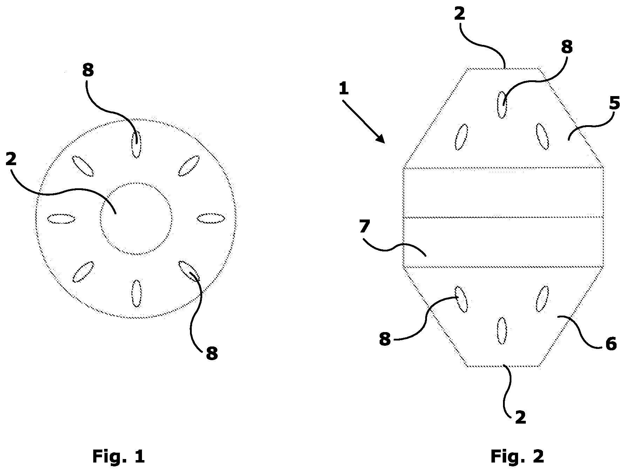

fig. 1 is a plan view of an embodiment of the washing device according to the invention;
fig. 2 is a side view of the same device as in fig. 1;

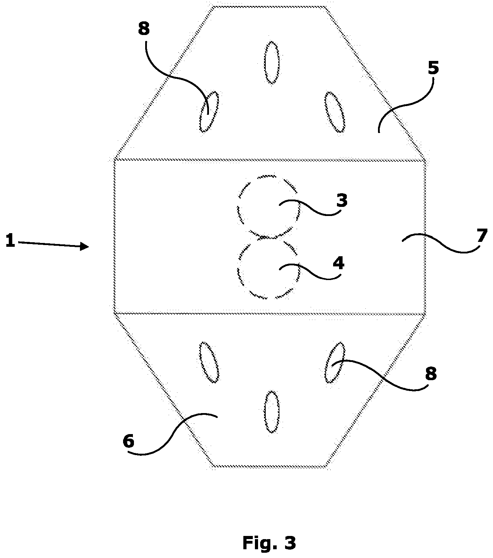

fig. 3 is a view similar to fig. 2, partly showing the space inside;

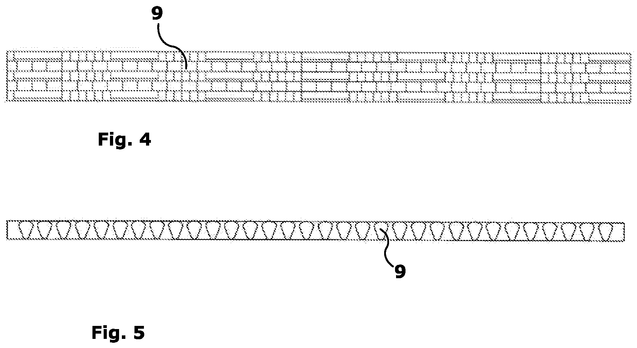

fig. 4 is a plan view of a detail of the device according to this invention;
fig. 5 is a front view of the same detail shown in fig. 4;

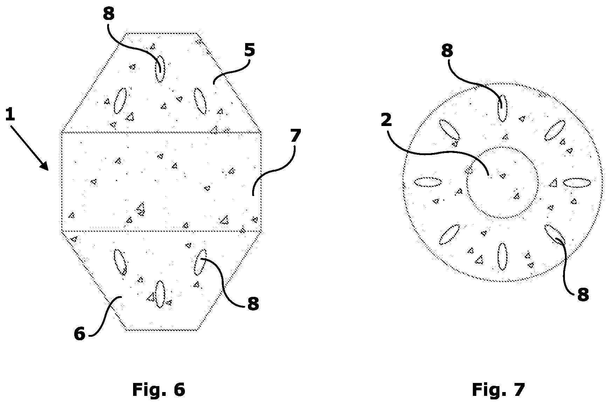

fig. 6 is a view like fig. 2, during a step of the washing process;
fig. 7 is a view similar to fig. 1, during a step of the washing process;

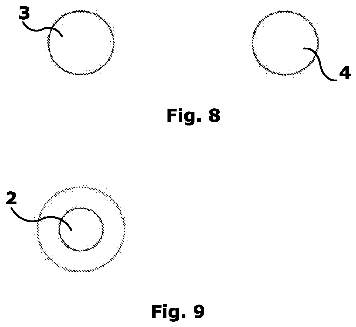

fig. 8 shows two internal components of the washing device; and
fig. 9 shows a detail during a step of the washing process.

### BEST WAY TO CARRY OUT THE INVENTION

Basically, this invention consists in a box 1, having at least two holes 2 and containing a number of metallic spheres 3, 4 (two in the drawings, but the number is not limited, in principle).

The box 1 can be of any solid material, like a metal, a plastic material or others. Preferably, it is in a plastic material, so as to be very light and cheap and not to damage by friction clothes and washing basket. The shape of the box 1 is not critical. Anyway, the best performances have been reached with a box 1 formed by two frustoconical sections 5, 6, joined together by a cylinder 7. Preferably, the holes 2 are located at the top of the frustoconical sections 5, 6. According to a preferred embodiment, the frustoconical sections have a slope of 22.5°. Of course, the diameter of the holes 2 is smaller than the diameter of the spheres 3, 4, so as to avoid that spheres 3, 4 exit from the box 1, what would make impossible a proper work of the inventive device.

According to a preferred embodiment, the side surfaces of the box 1 are micro-perforated with small long holes 8, so as to improve the exchange of water within the box 1 and with the water outside it, and to provide a better contact of water with the spheres 3, 4, what enhances the wash performance.

According to a preferred embodiment, a sphere of pure silver is also contained in the box 1. This sphere in pure silver improves the sterilisation of clothes during the wash.

The best results are obtained when also two spheres of thickened sodium coco sulfate are contained in the box 1, with a negligeable addition of surfactant in the water; this addition, which has highly beneficial effects, is however not so big to pollute effectively the water and sodium coco sulfate is widely recognised as being completely biodegradable.

The spheres 3, 4 are in a metallic material. Preferably, the metallic material is a ferromagnetic material, more preferably the ferromagnetic material is neodymium, which can be easily polarised and biased. The spheres 3, 4 are in fact permanent magnets. Preferably, the spheres 3, 4 are at least partially coated with a plastic ring 9; the most preferred material for the plastic ring 9 is polyamide, most preferably a nylon, which has the right toughness for brushing, without damaging the clothes.

In the use, the box 1, containing the spheres 3, 4, is inserted in the washing basket of a washing machine, among the clothes to be washed. Normally, no soap nor detergent is added. The washing machine can be either an industrial or a domestic one.

The washing machine is activated and water enters the washing basket, wetting also the box 1 and the spheres 3, 4. When the basket starts turning, its motion moves also the spheres 3, 4 one with the respect to the other and to the internal walls of the box 1. The motion of the spheres 3, 4 biases the magnetic fields, giving a fast exchange of polarity, resulting in a transient, localised increase of pH, possibly over 9. This acts on the water, breaking down the water, thus aggregating and crystallising the CaCO₃ contained therein as limescale in the aragonite form and, because of the salt contained in the same water, transforms it into NaHCO₃, which has a detergent effect, so that clothes become cleaner and cleaner. Moreover, the mechanical friction of the ring 9 on the fibres on which it is rubbed - however, without tearing or ripping clothes-, has two main effects: on one hand, it brushes the fibres and, on the other hand, it has a synergistic action on the cleaning of clothes, improving the action of the washing machine. If the box 1 is composed by two frustoconical sections 5, 6, joined by a cylinder 7, the water entering the box 1 has an irregular motion, which is particularly beneficial for the washing performance; the slope of 22.5° of the frustoconical sections 5, 6 resulted in the best performance. The friction is helped and assisted by the magnetic repulsion between the two spheres 3, 4, repulsion which is confined by the walls of the box 1. The increase of pH is only temporary and local and, after the washing effect is completely performed, it comes back to 7. This continuous change of pH provokes the output of active oxygen (during the formation of NaHCO₃), which disinfects the environment, killing pathogenic microorganisms and making clothes not dangerous for the health of people contacting them. Some tests were performed to show the disinfection of the clothes washed with the device according to this invention; in particular, tests performed according to the method APAT IRSA-CNR Manual and Guidelines 29:2003 - Method 2060, showed a very strong reduction in bacteria and moulds content in clothes washed with the inventive device.

After the wash, the box 1 can be easily recovered from the washing basket and reutilised, as many times as desired.

The device according to this invention can be suitably used for any kind of fibres, like the usual animal fibres and, furthermore, cotton, viscose, acrylic, polyester, wool, linen and others.

The washing effect can be obtained at a water temperature as low as 15 °C, with a consequent energy saving and the drained waste water has no soap and its reclamation is by far easier than with the wastewater coming from the traditional systems for washing; this temperature can be kept even with the embodiment providing a sphere in thickened sodium coco sulfate within the box 1. Although less important, there is also a time saving in the overall wash, normally by two thirds. Moreover, there is no need of hand brushing, which results in a further cost saving for the overall washing process.

Water drained after washing with the inventive device can be reused after filtering it with mechanical filters in an aerobic percolator, so that an industrial closed circuit washing machine can now be produced, since wastewater is in fact not polluted, with an important saving of drink water; this advantage is not impaired even with the embodiment providing a sphere of thickened sodium cocoil sulfate within the box 1, since sodium coco sulfate is completely biodegradable.

The brushing effect makes the washed clothes much softer than according to the prior art, without an addition of degreasing and/or silicone agents.

It is anyway understood that the invention should not be limited to the particular embodiment described, which is only an exemplary, non-limiting, embodiment of the invention, but that many different modification thereof are possible, all within the reach of the skilled person, without departing from the scope of the invention, which is defined by the appended claims.

### LIST OF REFERENCE NUMERALS

- 1: Box
- 2: Hole (of 1)
- 3: Metal sphere
- 4: Metal sphere
- 5: Frustoconical section (of 1)
- 6: Frustoconical section (of 1)
- 7: Cylinder (of 1)
- 8: Small long hole (of 1)
- 9: Plastic ring (of 3 or 4)

## Claims

1. Washing device, consisting in a box (1) to be inserted in the washing basket of a washing machine, wherein the box (1) has two holes (2), allowing the access and the exit of water within the box (1), wherein a number of metallic spheres (3, 4) are contained within the box (1), said spheres having a diameter larger than the said two holes (2), **characterised in that** said metallic spheres (3, 4) are permanent magnets and **in that** a sphere of pure silver is also contained in the box (1).

2. Washing device as claimed in claim 1), **characterised in that** the box (1) is of a solid material, like a metal or a plastic material.

3. Washing device as claimed in claim 1), **characterised in that** the box (1) is in a plastic material.

4. Washing device as claimed in claim 1), **characterised in that** said box (1) is formed by two frustoconical sections (5, 6), joined together by a cylinder (7), the holes (2) being located at the top of the frustoconical sections (5, 6).

5. Washing device as claimed in claim 4), **characterised in that** the frustoconical sections (5, 6) have a slope of 22.5°.

6. Washing device as claimed in any previous claim, **characterised in that** the spheres (3, 4) are in a ferromagnetic material.

7. Washing device as claimed in claim 6), **characterised in that** such ferromagnetic material is neodymium.

8. Washing device as in any previous claim, **characterised in that** the spheres (3, 4) are at least partially coated with a plastic ring (9).

9. Washing device as claimed in claim 8), **characterised in that** the plastic ring (9) is of polyamide, preferably of a nylon.

10. Washing device as in any previous claim, **characterised in that** also two spheres of thickened sodium coco sulfate are contained in the box (1).

## Patentansprüche

1. Waschvorrichtung, bestehend aus einem Kasten (1), der in den Waschkorb einer Waschmaschine eingesetzt werden soll, wobei der Kasten (1) zwei Löcher (2) aufweist, die den Zugang und den Austritt von Wasser innerhalb des Kastens (1) ermöglichen, wobei eine Anzahl von Metallkugeln (3, 4) innerhalb des Kastens (1) enthalten ist, wobei die Kugeln einen größeren Durchmesser als die zwei Löcher (2) aufweisen, **dadurch gekennzeichnet, dass** die Metallkugeln (3, 4) Permanentmagnete sind und dass eine Kugel aus reinem Silber ebenfalls in dem Kasten (1) enthalten ist.

2. Waschvorrichtung nach Anspruch 1), **dadurch gekennzeichnet, dass** der Kasten (1) aus einem festen Material, wie einem Metall oder einem Kunststoffmaterial, besteht.

3. Waschvorrichtung nach Anspruch 1), **dadurch gekennzeichnet, dass** der Kasten (1) aus einem Kunststoffmaterial besteht.

4. Waschvorrichtung nach Anspruch 1), **dadurch gekennzeichnet, dass** der Kasten (1) durch zwei kegelstumpfförmige Abschnitte (5, 6) gebildet ist, die durch einen Zylinder (7) miteinander verbunden sind, wobei sich die Löcher (2) an der Oberseite der kegelstumpfförmigen Abschnitte (5, 6) befinden.

5. Waschvorrichtung nach Anspruch 4), **dadurch gekennzeichnet, dass** die kegelstumpfförmigen Abschnitte (5, 6) eine Neigung von 22,5° aufweisen.

6. Waschvorrichtung nach einem der vorhergehenden Ansprüche, **dadurch gekennzeichnet, dass** die Kugeln (3, 4) aus einem ferromagnetischen Material bestehen.

7. Waschvorrichtung nach Anspruch 6), **dadurch gekennzeichnet, dass** ein solches ferromagnetisches Material Neodym ist.

8. Waschvorrichtung nach einem der vorhergehenden Ansprüche, **dadurch gekennzeichnet, dass** die Kugeln (3, 4) zumindest teilweise mit einem Kunststoffring (9) beschichtet sind.

9. Waschvorrichtung nach Anspruch 8), **dadurch gekennzeichnet, dass** der Kunststoffring (9) aus Polyamid, vorzugsweise aus einem Nylon, besteht.

10. Waschvorrichtung nach einem der vorhergehenden Ansprüche, **dadurch gekennzeichnet, dass** ebenfalls zwei Kugeln aus verdicktem Natriumkokossulfat in dem Kasten (1) enthalten sind.

## Revendications

1. Dispositif de lavage, consistant en un boîtier (1) à insérer dans le tambour d'un lave-linge, dans lequel le boîtier (1) a deux trous (2), permettant à l'eau d'accéder à l'intérieur du boîtier (1) et d'en sortir, dans lequel un certain nombre de sphères métalliques (3, 4) sont contenues à l'intérieur du boîtier (1), lesdites sphères ayant un diamètre plus grand que lesdits deux trous (2), **caractérisé en ce que** lesdites sphères métalliques (3, 4) sont des aimants permanents et **en ce qu'**une sphère d'argent pur est également contenue dans le boîtier (1).

2. Dispositif de lavage comme revendiqué dans la revendication 1), **caractérisé en ce que** le boîtier (1) est en un matériau solide, comme un métal ou une matière plastique.

3. Dispositif de lavage comme revendiqué dans la revendication 1), **caractérisé en ce que** le boîtier (1) est en une matière plastique.

4. Dispositif de lavage comme revendiqué dans la revendication 1) , **caractérisé en ce que** ledit boîtier (1) est formé par deux sections tronconiques (5, 6), reliées l'une à l'autre par un cylindre (7), les trous (2) étant situés en haut des sections tronconiques (5, 6).

5. Dispositif de lavage comme revendiqué dans la revendication 4) , **caractérisé en ce que** les sections tronconiques (5, 6) ont une pente de 22,5°.

6. Dispositif de lavage comme revendiqué dans l'une quelconque des revendications précédentes, **caractérisé en ce que** les sphères (3, 4) sont en un matériau ferromagnétique.

7. Dispositif de lavage comme revendiqué dans la revendication 6) , **caractérisé en ce qu'**un tel matériau ferromagnétique est du néodyme.

8. Dispositif de lavage comme dans l'une quelconque des revendications précédentes, **caractérisé en ce que** les sphères (3, 4) sont au moins partiellement revêtues d'un anneau plastique (9).

9. Dispositif de lavage comme revendiqué dans la revendication 8) , **caractérisé en ce que** l'anneau plastique (9) est en un polyamide, de préférence en un nylon.

10. Dispositif de lavage comme dans l'une quelconque des revendications précédentes, **caractérisé en ce que** deux sphères de sodium coco-sulfate épaissi sont également contenues dans le boîtier (1).
